(19)

Europäisches Patentamt

European Patent Office

Office européen des brevets

(11) **EP 4 530 582 A1**

(12) **EUROPEAN PATENT APPLICATION**

(43) Date of publication:
02.04.2025 Bulletin 2025/14

(21) Application number: 23199844.4

(22) Date of filing: 26.09.2023

(51) International Patent Classification (IPC):
**G01D 5/26** (2006.01)  **G01J 1/00** (2006.01)
**G01M 11/00** (2006.01)

(52) Cooperative Patent Classification (CPC):
**G01D 5/268; G01J 1/00; G01M 11/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Stichting VU**
**1081 HV Amsterdam (NL)**

(72) Inventors:
• **AVCI, Bakiye Imran**
**1081 HV Amsterdam (NL)**
• **DASHTABI, Mahdi Mozdoor**
**1081 HV Amsterdam (NL)**

(74) Representative: **V.O.**
**P.O. Box 87930**
**2508 DH Den Haag (NL)**

(54) **SYSTEM AND METHOD FOR INTERROGATING A PHOTONIC CIRCUIT**

(57)    A system (100) for interrogating a photonic circuit (10). A sample light source (30s) is configured to generate sample input light (Li) at a sample frequency (vs). An input coupler (21) is configured to send the sample input light (Li) from the sample light source (30s) into the photonic circuit (10). An output coupler (22) is configured to receive sample output light (Lo) from the photonic circuit (10). A reference light source (30r) is configured to generate reference light (Lr) at a reference frequency (vr). An optical heterodyne detector (40) is configured to combine the sample output light (Lo) with the reference light (Lr); measure the combined light (Lc); and determine a magnitude (P) of an oscillating intensity component (I) in the combined light (Lc) as function of a beating frequency (f) between the sample frequency (vs) and the reference frequency (vr).

FIG 1A

**Description**

TECHNICAL FIELD AND BACKGROUND

The present disclosure relates to systems and methods for interrogating a photonic circuit.

Photonic circuits can be used in various applications such as data centers, artificial neural networks, medical diagnostics, optical sensing, quantum computing, and astronomy. For example, a photonic integrated circuit (PIC), also referred to as an "optical chip", with ultra-low loss integrated micro-resonators may be employed in various emerging applications including optical sensing, photonic processors, ultra-narrow linewidth lasers, frequency stabilization, precision spectroscopy, and quantum computation. As will be appreciated, the precise optical characterization of an optical chip is an important step in their successful implementation. For example, micro-ring based sensors can be used in the detection of various biological and chemical materials in which, very small changes in the surrounding medium cause the resonance wavelength to shift, allowing high-resolution detection. However, the characterization of optical chips is often limited by measurement techniques, i.e. optical spectrum analyzers or tunable lasers, which may lack the sensitivity, speed, and sub-picometer resolution necessary for measuring ultra-small shifts of the resonance peaks. Furthermore, sub-MHz narrow linewidth tunable lasers may suffer from long-term (millisecond) frequency stability during measurement time and, in some cases, need dithering to stabilize. Furthermore, their frequency may be subject to some uncertainty throughout a sweep. To alleviate these problems, different approaches can be used such as comparing the resonance width with sidebands of a modulated laser, or comparing with a spectrum of an asymmetric fiber Mach-Zehnder interferometer (MZI) and/or confirmation with lifetime measurement (ring down) techniques. Another solution may be to combine a phase modulator (PM) with a vector network analyzer (VNA). Unfortunately, these solutions may come at the expense of increased system complexity.

There remains a need for further improvements of systems and methods for interrogating photonic circuits, such as improving the resolution for measuring spectral characteristics and/or sensor values derived from photonic circuits, and in particular enabling easy interrogation of photonic integrated circuits, without increasing system complexity.

SUMMARY

The present disclosure generally relates to systems and methods for interrogating a photonic circuit. A sample light source is configured to generate sample input light at one or more sample frequencies. An input coupler is configured to send the sample input light from the sample light source into an input port of the photonic circuit. An output coupler is configured to receive sample output light from an output port of the photonic circuit. A reference light source is configured to generate reference light at a reference frequency. Advantageously, an optical heterodyne detector is configured to combine the sample output light with the reference light. The combined light has an intensity component oscillating at one or more beating frequencies (corresponding to a difference between one or more sample frequencies and the reference frequency). By measuring the combined light, the magnitude of the oscillating intensity component(s) as function of the beating frequency can be determined.

As will be appreciated, one or more spectral characteristics and/or sensor values of the photonic circuit can be determined directly based on the magnitude of the oscillating intensity component as function of the beating frequency. For example, after mixing the sample output light with the reference light onto a detector, the difference in their optical frequency can be measured directly using an electric spectrum analyzer (ESA). Here, the optical frequency of the sample laser relative to that of the reference laser may be mapped into the RF spectral domain and can be precisely measured using electronics. As far as the frequency of the reference laser is known, the frequency of the sample laser can be deduced from the ESA output. Therefore, one can use a fixed wavelength laser as a reference for measurement. As a non-scanning laser can remain stable enough during measurement time, much better than a scanning one, a steady laser can be used as a reference and the frequency of the sample laser may be derived from the beating frequency in ESA. As a result, there will be no need to know the exact frequency of the sample laser and moreover, any frequency jumps and noise of the scanning laser can be automatically seen on the RF spectrum. Even a sample laser with randomly fluctuating frequency could be employed, as long as it has sufficiently stable amplitude and/or known amplitude fluctuation.

In a preferred embodiment, the sample light source is a tunable laser, which is controlled to output a variable sample frequency with a narrow linewidth sweeping a range of sample frequencies. The inventors find that this can be advantageously used with the presently disclosed technique resulting in a new technique, which is referred to herein as "sweeping optical heterodyne detection" (SOHO). The inventors find that SOHO can be advantageously used to provide high resolution, high sensitivity measurements. For example, as disclosed herein, the inventors have used the technique to demonstrate <40fm spectral resolution over 6GHz bandwidth. Furthermore, by modulating the tunable laser using this technique, real-time operation was achieved. Furthermore, the inventors characterized micro-ring resonators with high quality factors (Q) and demonstrated that the technique can provide more accurate results with higher resolution and sensitivity compared to the commonly used method based on a tunable laser and a photodiode. The inventors also found that the technique can facilitate free space coupling with photonic circuits, e.g. due to the signal enhancement. This disclosure thus holds great promise both for PIC characterization as well as for high-resolution spectral measurements of weak optical signals.

BRIEF DESCRIPTION OF DRAWINGS

These and other features, aspects, and advantages of the apparatus, systems and methods of the present disclosure will become better understood from the following description, appended claims, and accompanying drawing wherein:

FIG 1A illustrates a system for interrogating a photonic circuit;
FIG 1B illustrates a positioning device for free-space coupling to the photonic circuit;
FIG 2A illustrates further details of a fiber coupler and photodetector;
FIG 2B illustrates an experimental setup;
FIG 3A illustrates a linearized heterodyne signal on an electrical spectrum analyzer (ESA) used in the experimental setup relative to the sample laser power;
FIG 3B illustrates long-term linewidth measurement of the tunable laser used in the experimental setup;
FIG 4A illustrates the measured spectrum of an unbalanced fiber Mach-Zehnder interferometer;
FIG 4B illustrates the spectrum of a micro-ring resonator measured using both the standard method for comparison with the presently disclosed technique (SOHO);
FIG 5A illustrates a comparison of spectral shapes of the laser for sinusoidal and triangular modulation;
FIG 5B illustrates real-time measurements of a micro-ring resonance shift.

DESCRIPTION OF EMBODIMENTS

The terminology used for describing particular embodiments is not intended to be limiting to the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise, it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

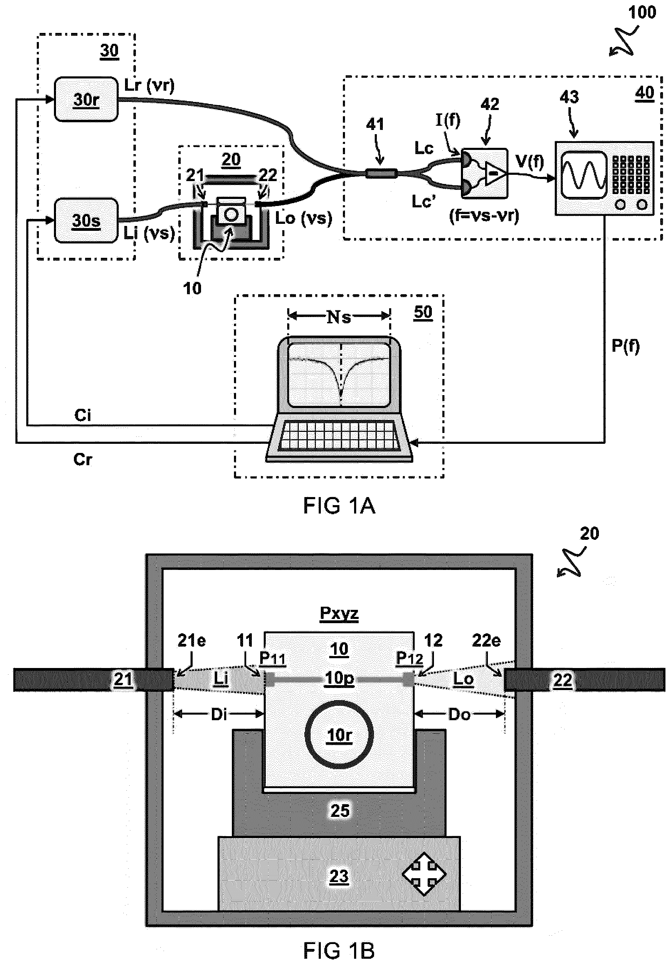

FIG 1A illustrates a system 100 for interrogating a photonic circuit 10. The system 100 comprises a sample light source 30s configured to generate sample input light Li. Preferably, the sample light source 30s is a tunable light source configured to generate the sample input light Li at a variable sample frequency vs. For example, a controller 50 is configured to control the sample light source 30s to vary the sample frequency vs over a range of sample frequencies Ns. While a sweeping light source is preferred, also a non-varying sample light source could be used, e.g. a broadband light source covering a range of sample frequencies Ns. In principle, the sample frequency vs could also be randomly fluctuating.

The sample input light Li from the sample light source 30s is sent into the photonic circuit 10. For example, as shown in FIG 1B, the input light Li is coupled into an input port 11 of the photonic circuit 10 from a respective input coupler 21 of the system 100. Sample output light Lo, resulting from the sample input light Li having interacted in the photonic circuit 10, may be received. For example, as shown in FIG 1B, the sample output light Lo is coupled from an output port 12 of the photonic circuit 10 into a respective output coupler 22 of the system 100.

As further illustrated in FIG 1A, the system 100 comprises a reference light source 30r configured to generate reference light Lr at a reference frequency vr. As disclosed herein, the system is configured to combine the sample output light Lo with the reference light Lr. This results in combined light Lc having an intensity component I oscillating at a beating frequency f. The beating frequency f corresponds to a difference vs-vr between the sample frequency vs and the reference frequency vr. In the embodiment shown, an optical heterodyne detector 40 is configured to measure the combined light Lc; and determine, based on the measurement of the combined light Lc, a magnitude P of the oscillating intensity component I as function of the beating frequency f.

In some embodiments, the system 100 is configured to determine one or more spectral characteristics of the photonic circuit 10 based on the magnitude P of the oscillating intensity component I as function of the beating frequency f. For example, the system 100 is configured to determine a transmission and/or reflection spectrum based on the measured amplitude of the oscillating component Vf as function of the beating frequency f. In one embodiment, the photonic circuit 10 comprises one or more sensing elements. For example, the photonic circuit 10 comprises one or more of a (micro)ring resonator, (unbalanced) fiber Mach-Zehnder interferometer (MZI), variable optical attenuator (VOA), et cetera. In another or further embodiment, the one or more spectral characteristics of the photonic circuit 10 are indicative of one or more sensor values measured by the one or more sensing elements. For example, the one or more sensing elements may be sensitive to one or more characteristics of a surrounding medium or environment. For example, the one or more sensing elements can be used for measuring one or more of a (surrounding) refractive index, temperature, pressure, gas concentration, biosensing, chemical sensing, molecular binding, vibration, strain, magnetic field, optical power, pH sensing, et cetera. In other or further embodiments, the system 100 is configured to determine one or more sensor values measured by one or more sensing elements of the photonic circuit 10 based on the magnitude P of the oscillating intensity component I as function of the beating frequency f.

In some embodiments, the controller 50 is used to determine the one or more spectral characteristics. For example, the controller 50 may comprise, or be comprised in, a computing device or other device capable of analyzing and/or processing measurement values. In another or further embodiment (not shown), the one or more spectral characteristics are determined by another computing device, e.g. dedicated analyzer, optionally coupled to the controller 50. In some embodiments, system 100, e.g. the controller and/or computing device is/are configured to determine one or more sensor values based on the one or more spectral characteristics of the photonic circuit 10. For example, a spectral position and/or spectral width of a dip or peak in a transmission or reflection spectrum of the photonic circuit 10 may be indicative of a sensor value measured by a sensing element of the photonic circuit 10 such as a ring resonator or other sensing element. These and other features may also be embodied as a (non-transitory) computer-readable medium storing instructions that, when executed by one or more processors (e.g. in the controller 50 or other computing devices), cause the system as described herein to measure a photonic circuit 10, e.g. determine one or more spectral characteristics and/or sensor values of the photonic circuit 10.

In a preferred embodiment, the sample light source 30s is a tunable laser, whereas the reference light source 30r is preferably a steady laser configured to output the reference light Lr with a fixed reference frequency vr. Most preferably, the reference light source 30r has a relatively narrow spectrum or linewidth, e.g. having a FWHM of less than one hundred megahertz, less than ten megahertz, less than one megahertz, less than one hundred kilohertz, less than ten kilohertz, down to one kilohertz, or even lower. For example, distributed feedback and distributed Bragg reflector diode lasers may be used for narrow linewidth applications wherein typical linewidths may range from a few kilohertz (kHz) to a few megahertz (MHz). Of course, also other types of lasers can be used. Typically, the narrower the linewidth, the better the resolution which may be theoretically obtained.

In a preferred embodiment, the sample light source 30s also has a relatively narrow linewidth, e.g. having a FWHM of less than one hundred megahertz, less than ten megahertz, less than one megahertz, less than one hundred kilohertz, less than ten kilohertz, down to one kilohertz, or even lower. For example, this allows a relatively easy measurement and/or using a simple light source and may maximize amplification and dynamic range. In another or further preferred embodiment, the sample light source 30s has a bandwidth which is the same or similar as the bandwidth of the electrical spectrum analyzer. This may increase measurement speed. In principle, also a (varying or non-varying) broadband sample light source 30s could be used in combination with a narrow linewidth reference light source 30r, e.g. having a fixed reference frequency vr. However, when using a broadband sample light source 30s, care should be taken that the spectrum of the sample light is not so broad as to cause the spectrum folding back on the measurement window. For example, the broad band source light may have at least one cut off at one side of its spectral shape like a step function. When using a sample light source 30s with relatively narrow linewidth, possible folding back of the spectrum in the measurement window can be more easily controlled and/or compensated for. For example, an (approximate) setting of the control signal Cs to the sample light source 30s can be used to correct and/or disambiguate folding of the spectrum in the measurement window. In principle, the reference frequency vr could also be variable, as long as it is known while measuring the respective magnitude P of one or more oscillating intensity components as function of one or more beating frequencies so that the one or more sample frequencies could be reconstructed.

In practice, it may be difficult to maintain control over the exact frequency outputted by a light source, in particular in the case of a sample light source, and even more in particular if the sample light source should output a relatively narrow linewidth spectrum. The present systems and methods may alleviate the issue of limited frequency control of the sample light source 30s by determining a magnitude P of the oscillating intensity component I as function of the beating frequency f. With determining the magnitude "P" of the oscillating intensity component as function of the beating frequency "f", it is understood that a functional dependence between the values of "f' and "P" is determined. For example, this comprises determining respective pairs of corresponding values [$f_n$, $P_n$] for the magnitude "P" and the beating frequency "f", where "n" indicates an index of the respective pair. As described herein, not only a respective value of the magnitude "P" may be determined from the measurement of the combined light Lc, but also the corresponding value of the beating frequency "f'. By determining the beating frequency f from the measurement of the combined light Lc, it is not necessary to assume the input sample frequency vs. For example, using an electric spectrum analyzer, the beating frequency f can be directly determined from the spectrum. Optionally, also the sample frequency vs can be deduced as far as the reference frequency vr is known.

In some embodiments, the system 100 is configured to calculate the sample frequency vs based on the measured beating frequency f of the oscillating intensity component I in the measurement of the combined light Lc, and the reference frequency vr (e.g. as determined by the reference light source 30r), wherein the one or more spectral characteristics of the photonic circuit 10 are determined based on the magnitude P of the oscillating intensity component I as function of the calculated sample frequency vs. For example, the sample frequency vs is calculated by adding a measured value of the beating frequency f to a known value of the reference frequency vr. In one embodiment, the value of the reference frequency vr is a predetermined and/or fixed value. In another or further embodiment, a value of the reference frequency vr is set by control of the reference light source 30r, e.g. determined by a control signal Cr sent to the reference light source 30r by the controller 50. This may be the same controller 50 controlling the sample frequency vs of the sample light source 30s by sending a control signal Cs, or a different controller may be used. In another or further embodiment, a value of the reference frequency vr is measured, before and/or during the measuring of the photonic circuit 10.

In some embodiments (not shown), part of the reference light Lr may be split off to measure and/or monitor the reference frequency vr and/or the intensity of the reference light Lr. For example, a (beam) splitter and/or splitting coupler may be inserted in a light path of the reference light Lr before combining with the sample output light Lo. The intensity of the reference light Lr may also be known or constant during the measurement, e.g. using a stable reference light source 30r. Optionally, the measured or otherwise known intensity of the reference light Lr may be used to normalize a measurement of the combined light Lc and/or the intensity component I.

In other or further embodiments (not shown), part of the sample input light Li may be split off to measure and/or monitor the sample frequency vs and/or the intensity of the sample input light Li. For example, a (beam) splitter and/or splitting coupler may be inserted in a light path of the sample input light Li between the sample light source 30s and the input coupler 21. The intensity of the sample input light Li may also be known or constant during the measurement, e.g. using a sample light source 30s with constant output intensity and/or known intensity variation over the range of sample frequencies Ns. Optionally, the measured or otherwise known intensity of the sample input light Li may be used to normalize a measurement of the combined light Lc and/or the intensity component I.

In some embodiments, the optical heterodyne detector 40 comprises a photodetector 42 configured to measure a time-dependent intensity of the combined light Lc including the intensity component I oscillating at the beating frequency f. Preferably, the photodetector 42 is capable of measuring high-frequency signals corresponding to an (expected) range of the beating frequency f, e.g. according to the difference between the (variable) sample frequency vs over the range of sample frequencies Ns, and the reference frequency vr. For example, the photodetector 42 is capable of measuring signals having a frequency of more than one megahertz, preferably more than one gigahertz, e.g. up to five or ten gigahertz, or more.

In some embodiments, the optical heterodyne detector 40 comprises an electrical spectrum analyzer 43 configured to determine, based on an electrical measurement signal V of the combined light Lc, the magnitude P of the oscillating intensity component I as function of the beating frequency f. Preferably, the electrical spectrum analyzer 43 is capable of measuring and/or analyzing high-frequency signals corresponding to the expected range of the beating frequency f. For example, the photodetector 42 is capable of measuring and/or analyzing signals having a frequency of more than one megahertz, preferably more than one gigahertz, e.g. up to five or ten gigahertz, or more.

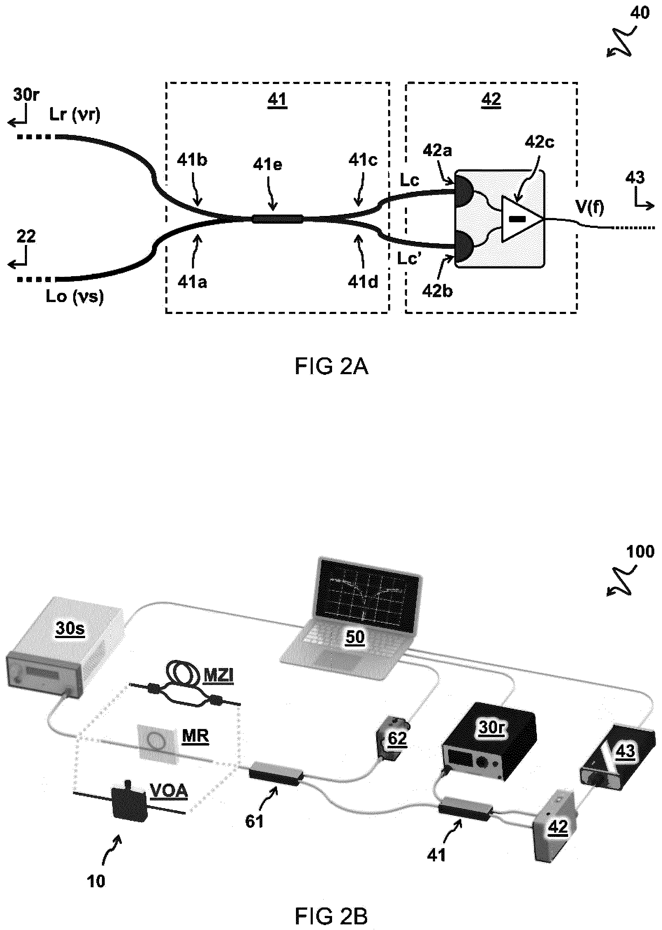

In some embodiments, the optical heterodyne detector 40 comprises a fiber coupler 41 configured to combine the sample output light Lo with the reference light Lr. For example, optical fibers may extend from the reference light source 30r and the output coupler 22 into the fiber coupler 41, as shown. Similarly, a fiber may also extend from the sample light source 30s to the input coupler 21, as shown. Advantageously, the fiber coupler 41 may directly output the combined light Lc onto the photodetector 42. In a preferred embodiment, as shown the fiber coupler 41 may have two outgoing fibers which may be both measured on the photodetector 42, as will be later explained in further detail with reference to FIG 2A. Alternatively, or additionally, to fiber couplings also other or further couplings could be used.

FIG 1B illustrates a positioning device 20 for free-space coupling to the photonic circuit 10. This may be used in the system of FIG 1A, or another positioning device could be used in FIG 1A. In a preferred embodiment, the photonic circuit 10 is a photonic integrated circuit or optical chip. In one embodiment, the photonic circuit 10 comprises a chip substrate, with at least one photonic pathway 10p between the input port 11 and output port 12. In another or further embodiment, the photonic circuit 10 comprises at least one photonic based sensing element 10r, e.g. arranged along at least one photonic pathway 10p, and/or forming part thereof.

In some embodiments, the system 100 comprises a positioning device 20 configured to hold the photonic circuit 10 at a controlled position Pxyz. In one embodiment, the input port 11 of the photonic circuit 10 is held at a controlled input position P 11 relative to an exit 21e of the input coupler 21. In another or further embodiment, the output port 12 of the photonic circuit 10 is held at a controlled output position P12 relative to an entrance 22e of the output coupler 22.

In a preferred embodiment, the input coupler 21 is configured to send the sample input light Li from the exit 21e of the input coupler 21, via a first free-space coupling path, into the input port 11 of the photonic circuit 10 held at the controlled input position P11. In another or further preferred embodiment, the output coupler 22 is configured to receive the sample output light Lo from the output port 12 of the photonic circuit 10 held at the controlled output position P12, via a second free-space coupling path, into the entrance 22e of the output coupler 22. In the embodiment shown, the exit 21e of the input coupler 21 is arranged at a first free-space distance D1 with respect to the input port 11 of the photonic circuit 10; and the entrance 22e of the output coupler 22 is arranged at a second free-space distance D2 with respect to the output port 12 of the photonic circuit 10. Preferably, one or both of the first free-space distance D 1 and second free-space distance D2 is between 0.1 and 25 millimeter, preferably between 0.5 and 10 millimeter, most preferably between one and five millimeter. These preferred ranges may provide both sufficient clearance between the photonic circuit 10, e.g. optical chip, and the entrance/exit of the free-space couplers 21,22, as well as sufficient signal reaching the input port 11 of the photonic circuit 10 and/or reaching the entrance of the output coupler 22. For example, the sample input light Li exiting the input coupler 21 and/or the sample output light Lo exiting the output port 12 of the photonic circuit 10 may be divergent.

In some embodiments (not shown), one or more focusing optics may be used to improve light transmission through the system. In one embodiment, the positioning device 20 comprises a first focusing element (not shown) arranged between the exit 21e of the input coupler 21 and the controlled input position P11 of the input port 11 (or integrated as part of the exit 21e of the input coupler 21), wherein the first focusing element is configured to focus the sample input light Li from the exit 21e of the input coupler 21 onto the input port 11 of the photonic circuit 10. In another or further embodiment, the positioning device 20 comprises a second focusing element (not shown) arranged between the controlled output position P12 of the input port output port 12 and the entrance 22e of the output coupler 22 (or integrated as part of the entrance 22e of the output coupler 22), wherein the second focusing element is configured to focus the sample output light Lo from the output port 12 of the photonic circuit 10 onto the entrance 22e of the output coupler 22.

In some embodiments, the positioning device 20 comprises a holder 25 configured to hold the photonic circuit 10. For example, the holder 25 is shaped complementary to a predetermined shape of the photonic circuit 10, e.g. optical chip, so that photonic circuit 10 may fit against a shape of the holder 25 for determining the controlled position Pxyz of the photonic circuit 10. In some embodiments (not shown), the exit 21e of the input coupler 21 and/or the entrance 22e of the output coupler 22 may be arranged in close proximity to the expected input position P11 and output position P 12 of the photonic circuit 10 when it is inserted in the holder 25. It can even be envisaged that, in use, the exit 21e of the input coupler 21 abuts the input port 11 of the photonic circuit 10 and/or the entrance 22e of the output coupler 22 abuts the output port 12 of the photonic circuit 10.

Alternative to the illustrated embodiment, the photonic circuit 10 may also have multiple input ports and/or multiple output ports. One or more input ports may also be used as an output port, or vice versa. Accordingly, the system may also comprise one or more input couplers, one or more output couplers, and/or one or more couplers functioning as both input and output couplers

In some embodiments, the positioning device 20 comprises a moveable stage 23 configured to adjust the controlled position Pxyz of the photonic circuit 10 relative to the exit 21e of the input coupler 21 and/or relative to the entrance 22e of the output coupler 22. For example, the moveable stage 23 may be moveable in one or more directions (X,Y,Z) and/or rotatable about one or more axes. In some embodiments (not shown), the positioning device 20 comprises a sensing device configured to determine a respective position of the input port 11 and/or output port 12 on a photonic circuit 10 inserted into the device; and adjust the controlled position Pxyz of the photonic circuit 10 relative to the exit 21e of the input coupler 21 and/or relative to the entrance 22e of the output coupler 22. While the present embodiment illustrates the moveable stage 23 controlling a position and/or orientation of the photonic circuit 10, it can alternatively or additionally be envisaged that a position and/or orientation of one or more of the input coupler 21 and/or output coupler 22 is adjusted.

Aspects of the present disclosure may also be embodied as methods of using of the system as described herein for measuring a photonic circuit 10, e.g. determining one or more spectral characteristics and/or sensor values of the photonic circuit 10. In some embodiments, the photonic circuit 10 is a photonic integrated circuit. In one embodiment, the photonic integrated circuit is inserted into the system, establishing a first free-space coupling between an input coupler 21 of the system 100 and an input port 11 of the photonic integrated circuit PIC, establishing a second free-space coupling between an output port 12 of the photonic integrated circuit PIC and an output port 12 of the system 100, and measuring one or more spectral characteristics of the photonic integrated circuit PIC. For example, the photonic circuit 10 has at least one ring resonator contacting a sample, wherein spectral characteristics of the ring resonator correspond to a measurement of the sample. In preferred embodiments, the systems and methods described herein are used to facilitate or enable the measurement of disposable sensors, in particular biosensor. For example, the disposable sensor may be formed as photonic integrated circuit that can be easily inserted and removed from the system, e.g. due to the enablement of fast free-space coupling and accurate readout with sufficient signal.

FIG 2A illustrates further details of a fiber coupler 41 and photodetector 42, e.g. as used in the system of FIG 1A. In some embodiments, e.g. as shown, the fiber coupler 41 comprises a first input fiber 41a connected to the output coupler 22 for receiving the sample output light Lo from the photonic circuit 10; and a second input fiber 41b connected to the reference light source 30r for receiving the reference light Lr. In one embodiment, e.g. as shown, the first and second input fibers 41a,41b converge into a mixing fiber part 41e configured to mix the sample output light Lo with the reference light Lr resulting in the combined light Lc. The fiber coupler 41 comprises at least one, preferably two, output fibers 41c,41d configured to output the combined light Lc. In a preferred embodiment, as shown, the fiber coupler 41 comprises a first output fiber 41c and a second output fiber 41d. For example, the output fibers 41c,41d are configured to output complementary parts of the combined light Lc having counter-phase varying intensities of the oscillating intensity component I. Most preferably, the optical fibers used in the system, or at least in the fiber coupler 41, are single mode fibers. This may facilitate easy mixing and/or mode matching without special alignment. Alternatively, also other mixing couplers can be used, and/or the sample output light Lo and the reference light Lr could be directly combined on a photodetector. However, this may be more difficult in the alignment and/or light loss.

In some embodiments, the optical heterodyne detector 40 comprises a photodetector 42 having a first photodiode 42a configured to receive a first part of the complementary parts and output a first electrical signal indicative of the intensity component I oscillating at the beating frequency f; and a second photodiode 42b configured to receive a second part of the complementary parts and output a second electrical signal indicative of the intensity component I oscillating at the beating frequency f, in counter-phase to the first electrical signal. Preferably, a differential amplifier is configured to receive the first and second electrical signals and output a differential electrical signal proportional to a difference between the first and second electrical signals. This may be advantageously used to double the signal.

FIG 2B illustrates a schematic of an experimental setup for testing the sweeping optical heterodyne detection method ("SOHO"). While details of the experimental setup are provided below to facilitate further understanding of specific ways for implementing the present technique, it will be understood that the present disclosure is not limited to these specific components and methods. In the experimental setup, the tunable laser (EMCORE TTX1995 micro-ITLA, called sample laser, i.e. sample light source 30s) is coupled to the photonic microchip via a single-mode optical fiber after passing through a polarization controller. In this setup the light coming out of the microchip is sent through a 90/10 splitter (61) with the 90% output sent to an amplified photodiode (Thorlabs, DET08CFC/M). This part of the setup is the commonly-used tunable laser-based characterization setup (termed "standard method") and the inventors embedded it into the SOHO setup to be able to make a direct comparison between the two methods. The remaining 10% of the light is combined with the reference laser (Thorlabs, WDM8-C-23A-20nm) through a 50/50 coupler (41) and is sent into a 5GHz balanced detector (Thorlabs, BDX3BA). A polarization controller (not shown) was employed after the reference laser (30r). When the frequency difference of the sample and the reference lasers (30s, 30r) are within the bandwidth of the photodetector, a beat frequency equal to the difference between the frequencies of the two lasers is detected on the balanced photodetector (42) and measured with the electrical spectrum analyzer (43) (ESA, Signal Hound, BB60D). The output signal has an intensity proportional to the product of the amplitudes of the sample and the reference lasers. Control of lasers, reading the ESA output, and data processing are done using a code written in C#. A variable optical attenuator (VOA) as a sample is used for checking the linearity of the measured signal relative to the input power. The output power of the sample port is calibrated using a power meter (not shown). An unbalanced fiber Mach-Zehnder interferometer (MZI) as a sample is used to show resolution enhancement of the sweeping heterodyne compared to the conventional method. The response of micro-ring resonators (MR) was also measured using the same setup. Polarization controllers which were placed after sample and reference lasers are not shown in this figure.

As described herein, optical heterodyne detection involves two optical signals, whereas the mixing product may be read out as an electrical signal. If the device under test is put after the sample laser (30s), by sweeping the frequency of the sample laser, its optical transmittance spectrum, T(v), can be extracted from the measured radio frequency (RF) spectrum $P(f)$. In this configuration the optical intensity after the interference of two lasers (30s, 30r) can be written as:

$$I(v) \propto I_R + I_S + 2\sqrt{I_R \, I_S \, T(v)} \qquad (1)$$

where, $I_R$ and $I_S$ are the intensity of reference and sample lasers, respectively, and T(v) is the transmittance of the sample as function of optical frequency, v. The detected signal on the photodiode (proportional to the AC part of the intensity) can be written as:

$$V(f) = \alpha\sqrt{I_R\, I_S\, T(\nu)} \tag{2}$$

where $\alpha$ is a constant representing the optical to electrical conversion responsivity of the setup and f is the electrical frequency mapped from optical heterodyne down-conversion of the lasers' beating frequency, i.e. $f = v_s - v_r$. The electrical spectrum analyzer 43 measures electrical power spectral density as function of f and demonstrates it in the dBm scale as formulated below:

$$P_{lin}(f) = \frac{V(f)^2}{Z} = \frac{\alpha^2 I_R\, I_S\, T(\nu)}{Z} \tag{3}$$

$$P_{lin}(f) = \frac{10^{\frac{P_{log}(f)}{10}}}{1000} \tag{4}$$

where Z is the input impedance of the ESA. By combining these two equations, T(v) may be written as:

$$T(\nu) = \frac{Z}{1000\,\alpha^2 I_R I_S}\, 10^{\frac{P_{log}(f)}{10}} \tag{5}$$

While these equations are provided to facilitate further understanding of specific ways for implementing the present technique, it will be understood that the present disclosure is not limited to any specific mathematical representation or derivation.

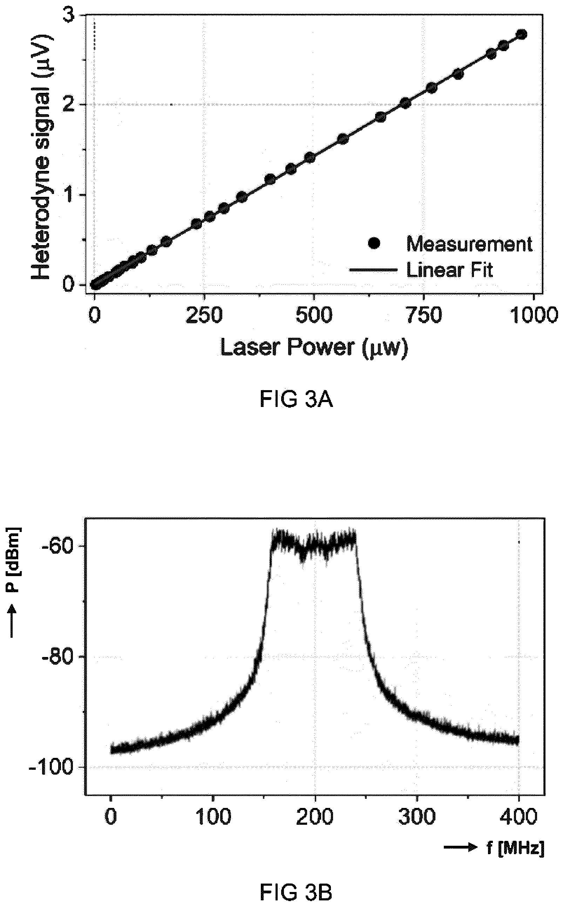

FIG 3A illustrates a linearized heterodyne signal on an electrical spectrum analyzer (ESA) used in the experimental setup relative to the sample laser power. The figure depicts the ESA output, converted to linear scale using Eq (4), relative to the input power measured with a photodiode and calibrated with a power meter. As will be appreciated, the SOHO method has an excellent linear relationship between input power and measured signal.

FIG 3B illustrates the long-term linewidth measurement of the tunable laser used in the experimental setup. While the short-term line width of the sample laser is less than 100 kHz, it has frequency dither and as a result, its long-term (millisecond) linewidth is widened to around 100 MHz. Therefore, it leads to a flat top spectral shape, which would normally deteriorate resolution.

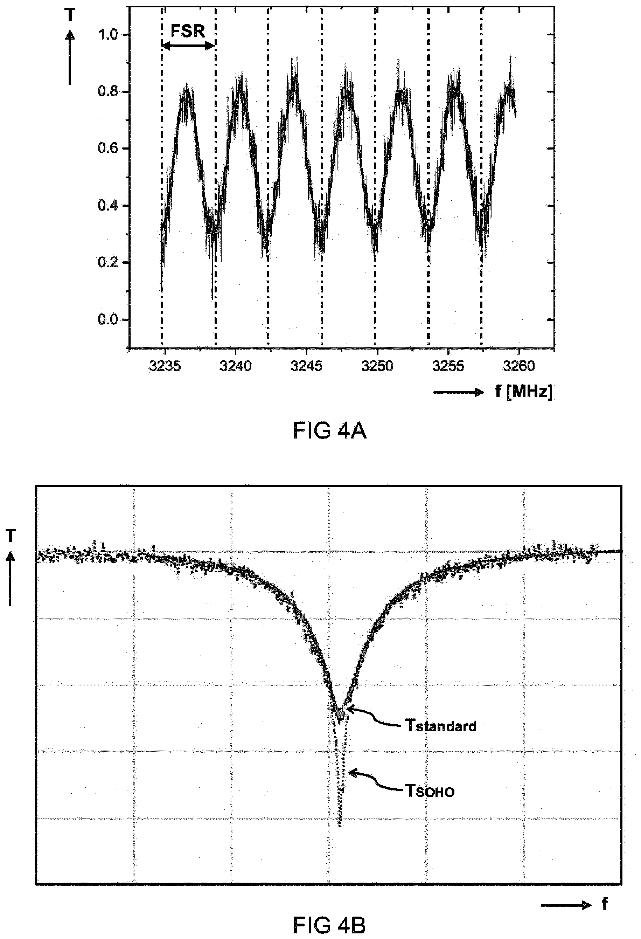

FIG 4A illustrates the measured spectrum of an unbalanced fiber Mach-Zehnder interferometer. While the standard method could not resolve the 3.8 MHz FSR of the MZI spectrum because of the 100 MHz linewidth of the laser (as shown in FIG 3B), SOHO is well capable of resolving this, as illustrated in this figure.

FIG 4B illustrates the spectrum of a micro-ring resonator measured using both the standard method for comparison with the presently disclosed technique (SOHO). For measuring the transmission spectrum of the micro-ring resonator with the SOHO setup, the reference laser is tuned to a frequency that is 3 GHz less than the micro-ring's resonance, and therefore the sample laser frequency is swept between 3 GHz prior and 3 GHz after the resonance frequency of the micro-ring resonator. A comparison of the spectral measurement results of a silicon micro-ring resonator using both the standard method and SOHO can be seen in this figure. As the sweeping heterodyne provides higher resolution and dynamic range, it shows a sharper and deeper resonance dip while this narrow structure washes out with the low resolution of the standard method. In conclusion, the sweeping heterodyne approach shows the resonance spectrum more clearly and accurately, compared to the standard method. It is noted that, compared to the SOHO method, for performing the measurements using the standard method, the inventors needed to further maximize the fiber-chip coupling efficiency and also increase the sample laser power to 10mw, while amplifying the detector signal by 30 dB to be able to even read sufficient signal with the standard method.

The inventors have further advanced the SOHO approach to be able to do real-time spectral measurements. Toward this goal, a function generator was connected to the fine-tuned port of the sample laser to modulate its central wavelength. In this way, by increasing/decreasing the applied voltage, the wavelength of the sample laser shifts toward shorter/longer wavelengths. Over a long period of time (> 1/modulation rate, the linewidth of the laser appears to be broadened. Here, the amplitude of the applied voltage determines the final linewidth and its frequency determines the rate of wavelength change.

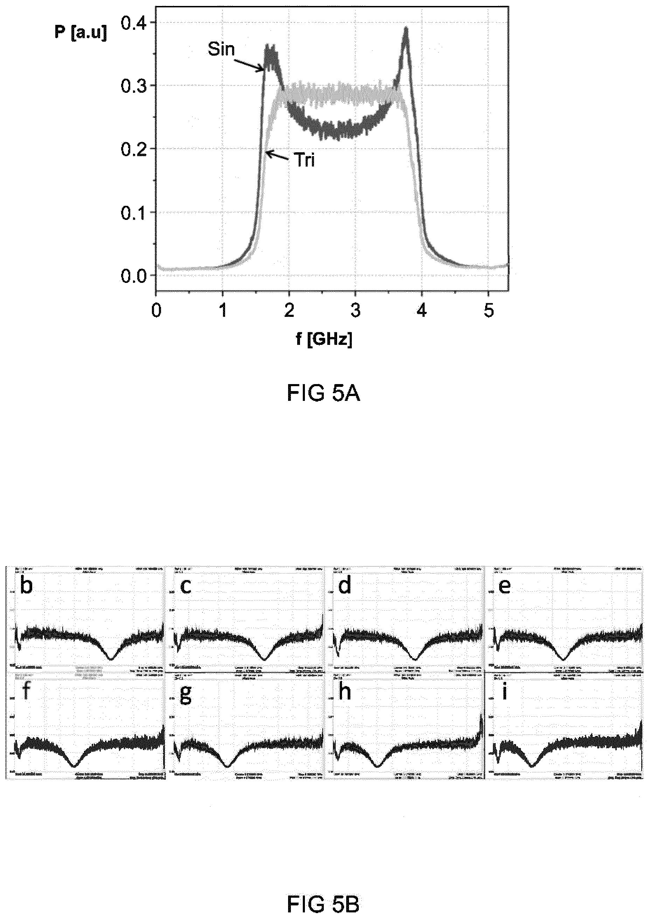

FIG 5A illustrates a comparison of spectral shapes of the laser for sinusoidal ("Sin") and triangular ("Tri") modulation. Here both of the plots are normalized to the frequency response of the system, which is measured when the laser wavelength is swept slowly (10 mHz) and the data maximum hold option of the ESA is on. As the dwell time of the laser wavelength is higher near the minimum and maximum of the sinusoidal modulation signal, the spectrum has an "M" shape, whereas it becomes flatter for a triangular modulator signal. To correct this issue and also have a similar detector response time at different heterodyne frequencies (on ESA), the measured spectrum of the chip is divided by a reference spectrum acquired by replacing the chip with a variable optical attenuator. It may be noted that correcting such nonlinear changes in wavelength over time would not be easy using the standard technique. Moreover, with triangular modulation, the standard method has a nonlinear response at high modulation frequencies. Therefore, SOHO is a much better approach for real-time measurements.

FIG 5B (insets "b" through "i") illustrates snapshot images of a real-time video of a micro-ring resonance shift during 4 seconds of illumination by a lamp from above. In this experiment, sinusoidal and triangular waves with 200 kHz frequency and 50% symmetry are applied. Real-time spectral measurements with 6 GHz bandwidth ($\approx$48pm) are performed at a frame rate of around 4.15frames/s (see supplemental video), which is limited by the capture rate of the ESA. Here, to shift the resonance of the micro-ring resonator, it was illuminated by a 150 W lamp from above. As can be seen, by increasing the chip temperature, its resonance shifts toward lower heterodyne frequencies, corresponding to shorter wavelengths.

For the purpose of clarity and a concise description, features are described herein as part of the same or separate embodiments, however, it will be appreciated that the scope of the invention may include embodiments having combinations of all or some of the features described. Of course, it is to be appreciated that any one of the above embodiments or processes may be combined with one or more other embodiments or processes to provide even further improvements in finding and matching designs and advantages. As the sweeping heterodyne technique is based on the detection of down-converted frequency on ESA, frequency accuracy and stability of the sample laser (tunable) are less important because they will be compared to the frequency of a stable reference laser. Furthermore, because of the same reason, the linewidth of the tunable laser does not need to affect the frequency resolution of the measurement. Even employing a laser with a wider linewidth may be beneficial since it can allow for a faster full scan of the measuring frequency window. For example, for precise measurement and tracking of resonance shift for sensing applications, a broad linewidth laser can be used as a sample laser and its wavelength can be put on the resonance. This configuration makes it possible to also view the micro-ring resonator's resonance spectrum without having to scan the laser frequency. As a result, it can increase the measurement speed significantly, whose maximum is defined by the maximum scan rate of the ESA. Therefore, using this technique, a non-tunable stable laser can be used as a reference in conjunction with a cost-effective free-running tunable laser without frequency stabilization. Another advantage may lie in the measurement of very weak signals with a good signal-to-noise ratio. This is important in particular for PIC devices with low fiber-chip coupling efficiency and/or free-space coupling. Additionally, measurements of nonlinear high-Q micro-ring resonators can benefit from this approach dramatically as a few microwatts of optical power could already excite unwanted effects.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate a synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A system (100) for interrogating a photonic circuit (10), the system (100) comprising

a sample light source (30s) configured to generate sample input light (Li) at a sample frequency (vs);
an input coupler (21) configured to send the sample input light (Li) from the sample light source (30s) into an input port (11) of the photonic circuit (10);
an output coupler (22) configured to receive sample output light (Lo) from an output port (12) of the photonic circuit (10);
a reference light source (30r) configured to generate reference light (Lr) at a reference frequency (vr); and
an optical heterodyne detector (40) configured to

combine the sample output light (Lo) with the reference light (Lr), resulting in combined light (Lc) having an intensity component (I) oscillating at a beating frequency (f), wherein the beating frequency (f) corresponds to a difference (vs-vr) between the sample frequency (vs) and the reference frequency (vr);
measure the combined light (Lc); and
determine, based on the measurement of the combined light (Lc), a magnitude (P) of the oscillating intensity component (I) as function of the beating frequency (f).

2. The system according to claim 1, wherein the sample light source (30s) is a tunable light source configured to generate sample input light (Li) at a variable sample frequency (vs), wherein the system comprises a controller (50) configured to control the sample light source (30s) to vary the sample frequency (vs) over a range of different sample frequencies (Ns);

3. The system according to any of the preceding claims, wherein the reference light source (30r) is a steady light source configured to output the reference light (Lr) as a narrow linewidth spectrum having a full-width-half-maximum, FWHM, less than one megahertz centered at a fixed reference frequency (vr).

4. The system according to any of the preceding claims, wherein the system (100) is configured to determine one or more spectral characteristics of the photonic circuit (10) based on the magnitude (P) of the oscillating intensity component (I) as function of the beating frequency (f).

5. The system according to the preceding claim, wherein the system (100) is configured to determine, based on the one or more spectral characteristics of the photonic circuit (10), one or more sensor values measured by one or more sensing elements of the photonic circuit (10).

6. The system according to any of the two preceding claims, wherein, in determining the one or more spectral characteristics of the photonic circuit (10), the sample frequency (vs) is calculated based on the measured beating frequency (f) of the oscillating intensity component (I) in the measurement of the combined light (Lc), and the reference frequency (vr), wherein the one or more spectral characteristics and/or sensor values are determined based on the magnitude (P) of the oscillating intensity component (I) as function of the calculated sample frequency (vs).

7. The system according to any of the preceding claims, wherein the optical heterodyne detector (40) comprises a fiber coupler (41) configured to combine the sample output light (Lo) with the reference light (Lr), wherein the fiber coupler (41) comprises

a first input fiber (41a) connected to the output coupler (22) for receiving the sample output light (Lo) from the photonic circuit (10);
a second input fiber (41b) connected to the reference light source (30r) for receiving the reference light (Lr);
wherein the first and second input fibers (41a,41b) converge into a mixing fiber part (41e) configured to mix the sample output light (Lo) with the reference light (Lr) resulting in the combined light (Lc); and
at least one output fiber (41c,41d) configured to output the combined light (Lc).

8. The system according to the preceding claim, wherein the fiber coupler (41) comprises a first output fiber (41c) and a second output fiber (41d), wherein the output fibers (41c,41d) are configured to output complementary parts of the combined light (Lc) having counter-phase varying intensities of the oscillating intensity component (I).

9. The system according to the preceding claim, wherein the optical heterodyne detector (40) comprises a photodetector (42) configured to measure a time-dependent intensity of the combined light (Lc) including the intensity component (I) oscillating at the beating frequency (f), wherein the photodetector (42) comprises

a first photodiode (42a) configured to receive a first part of the complementary parts and output a first electrical signal indicative of the intensity component (I) oscillating at the beating frequency (f);
a second photodiode (42b) configured to receive a second part of the complementary parts and output a second electrical signal indicative of the intensity component (I) oscillating at the beating frequency (f) in counter-phase to the first electrical signal; and
a differential amplifier configured to receive the first and second electrical signals and outputs a differential electrical signal proportional to a difference between the first and second electrical signals.

10. The system according to any of the preceding claims, wherein the optical heterodyne detector (40) comprises an electrical spectrum analyzer (43) configured to determine, based on an electrical measurement signal (V) of the combined light (Lc), the magnitude (P) of the oscillating intensity component (I) as function of the beating frequency (f).

11. The system according to any of the preceding claims, wherein the system (100) comprises a positioning device (20) configured to hold the photonic circuit (10) at a controlled position (Pxyz);

> wherein the input port (11) of the photonic circuit (10) is held at a controlled input position (P11) relative to an exit (21e) of the input coupler (21) and/or
> wherein the output port (12) or the photonic circuit (10) is held at a controlled output position (P12) relative to an entrance (22e) of the output coupler (22);
> wherein the input coupler (21) is configured to send the sample input light (Li) from the exit (21e) of the input coupler (21), via a first free-space coupling path, into the input port (11) of the photonic circuit (10) held at the controlled input position (P11);
> wherein the output coupler (22) is configured to receive the sample output light (Lo) from the output port (12) of the photonic circuit (10) held at the controlled output position (P12), via a second free-space coupling path, into the entrance (22e) of the output coupler (22).

12. The system according to the preceding claim, wherein the exit (21e) of the input coupler (21) is arranged at a first free-space distance (D1) with respect to the input port (11) of the photonic circuit (10); wherein the entrance (22e) of the output coupler (22) is arranged at a second free-space distance (D2) with respect to the output port (12) of the photonic circuit (10), wherein one or both of the first free-space distance (D1) and second free-space distance (D2) is between 0.1 and 25 millimeter.

13. The system according to the preceding claim, wherein the positioning device (20) comprises a holder (25) configured to hold the photonic circuit (10); and a moveable stage (23) configured to adjust the controlled position (Pxyz) of the photonic circuit (10) relative to the exit (21e) of the input coupler (21) and/or relative to the entrance (22e) of the output coupler (22).

14. Use of the system according to any of the preceding claims for. determining one or more spectral characteristics and/or sensor values of a photonic circuit (10), wherein the photonic circuit (10) is a photonic integrated circuit (PIC), the use comprising inserting the photonic integrated circuit (PIC) into the system, establishing a first free-space coupling between an input coupler (21) of the system (100) and an input port (11) of the photonic integrated circuit (PIC), establishing a second free-space coupling between an output port (12) of the photonic integrated circuit (PIC) and an output port (12) of the system (100), and measuring one or more spectral characteristics of the photonic integrated circuit (PIC).

15. A non-transitory computer-readable medium storing instructions that, when executed by one or more processors, cause the system according to any of the preceding claims to measure a photonic circuit (10) and determine one or more spectral characteristics and/or sensor values of the photonic circuit (10).

FIG 1A

FIG 1B

FIG 2A

FIG 2B

FIG 3A

FIG 3B

FIG 4A

FIG 4B

FIG 5A

FIG 5B

**EUROPEAN SEARCH REPORT**

Application Number

EP 23 19 9844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/115206 A1 (DE BOER BOER BART MICHIEL [NL] ET AL) 27 April 2017 (2017-04-27) * paragraph [0010] – paragraph [0019] * * paragraph [0040] – paragraph [0062] * * figures 1-3 * | 1-15 | INV. G01D5/26 G01J1/00 G01M11/00 |
| A | WO 2022/137027 A1 (BREMBO SPA [IT] ET AL.) 30 June 2022 (2022-06-30) * paragraph [0043] – paragraph [0054] * * paragraph [0079] – paragraph [0106] * * figure 1 * | 1-15 | |
| A | Rohde Schwarz: "Measuring with Modern Spectrum Analyzers Educational Note", , 1 February 2013 (2013-02-01), pages 1-127, XP093139010, Retrieved from the Internet: URL:https://scdn.rohde-schwarz.com/ur/pws/dl_downloads/dl_application/application_notes/1ma201_1/1MA201_9e_spectrum_analyzers_meas.pdf [retrieved on 2024-03-07] * page 1 – page 32 * | 1-15 | **TECHNICAL FIELDS SEARCHED (IPC)** G02F G01D |
| A | US 4 626 676 A (GERARDIN JEAN-PIERRE [FR]) 2 December 1986 (1986-12-02) * column 1, line 28 – column 2, line 59 * * figure 1 * | 1-15 | |

The present search report has been drawn up for all claims

| Place of search | Date of completion of the search | Examiner |
|---|---|---|
| Munich | 11 March 2024 | Paraf, Edouard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 9844

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2024

| Patent document cited in search report | | | Publication date | Patent family member(s) | | | Publication date |
|---|---|---|---|---|---|---|---|
| US 2017115206 | A1 | | 27-04-2017 | EP | 3126821 | A1 | 08-02-2017 |
| | | | | US | 2017115206 | A1 | 27-04-2017 |
| | | | | WO | 2015152717 | A1 | 08-10-2015 |
| WO 2022137027 | A1 | | 30-06-2022 | CN | 117242319 | A | 15-12-2023 |
| | | | | EP | 4267917 | A1 | 01-11-2023 |
| | | | | JP | 2024502771 | A | 23-01-2024 |
| | | | | KR | 20230124055 | A | 24-08-2023 |
| | | | | US | 2024044731 | A1 | 08-02-2024 |
| | | | | WO | 2022137027 | A1 | 30-06-2022 |
| US 4626676 | A | | 02-12-1986 | CA | 1243857 | A | 01-11-1988 |
| | | | | EP | 0176448 | A2 | 02-04-1986 |
| | | | | FR | 2571148 | A1 | 04-04-1986 |
| | | | | JP | S61107140 | A | 26-05-1986 |
| | | | | US | 4626676 | A | 02-12-1986 |

EPO FORM P0459

For more details about this annex : see Official Journal of the European Patent Office, No. 12/82